# EUROPÄISCHE PATENTSCHRIFT

(11) **EP 1 759 815 B1**
(45) Veröffentlichungstag und Bekanntmachung des Hinweises auf die Patenterteilung: **06.08.2008**
(21) Anmeldenummer: 06021993.8
(22) Anmeldetag: 09.06.2004
(51) Int. Cl.: B25J 9/00

(54) **Roboteranordnung mit einem auf einem Gestell angeordneten Roboter**
Robot assembly comprising a robot placed on a frame
Agencement de robot comprenant un robot placé sur un bâti

(43) Veröffentlichungstag der Anmeldung: 07.03.2007
(62) Teilanmeldung aus: 04013565.9
(73) Patentinhaber: ABB PATENT GmbH, 68526 Ladenburg (DE)
(72) Erfinder: Busalt, Markus, 61231 Bad Nauheim (DE); Diedrich, Franz, Dipl.-Ing., 61231 Bad Nauheim (DE)
(74) Vertreter: Miller, Toivo

(56) Entgegenhaltungen:
- EP-A- 0 582 117
- DE-C- 19 944 569
- PROSPEKT: "Reis Robots and Peripheral Modules, Welding & Cutting" April 2003 (2003-04), REIS , XP002297262 * Seite 2; Abbildung *

## Beschreibung

Die Erfindung betrifft eine Roboteranordnung nach dem Oberbegriff des Anspruches 1.

Roboteranordnungen mit einem Roboter und einem Positioniergerät sind allgemein bekannt. Üblicherweise ist ein Roboter neben einem Positioniergerät für Werkstücke angeordnet, so dass der Roboterarm von einer Position seitlich des Positioniergerätes in dessen Arbeitsbereich hineinbewegt wird, um die dort befindlichen Werkstücke zu bearbeiten. Das hat zur Folge, dass die Länge der Roboterarme entsprechend den geometrischen Verhältnissen am Positioniergerät gewählt werden muss. Das heißt, dass in dem Falle, wenn der komplette Arbeitsbereich des Positioniergerätes genutzt werden soll, die Gesamtlänge der Roboterarme entsprechend der weitest entfernt liegenden Stelle dieses Arbeitsbereiches gewählt werden muss.

Die maximale Tragfähigkeit des Roboters bei einer vorgegebenen Genauigkeit bzw. die Genauigkeit bei einer vorgegebenen Tragfähigkeit des Roboters nimmt jedoch mit der Länge der Roboterarme ab. Das wiederum heißt, dass gegebenenfalls ein größerer Roboter mit einer entsprechenden Tragfähigkeit gewählt werden muß. Eine andere allgemein bekannte Möglichkeit diese Situation zu verbessern ist es, den Roboter auf einem Gestell seitlich des Positionierers anzuordnen. Auf diese Weise kann die Höhenposition des Roboters auf die Höhenposition des Werkstücks angepasst werden und so eine geometrisch günstigere Anordnung der Arbeitsbereiche von Roboter und Positionierer erreicht werden.

Aus dem Prospekt "Reis Robots and Peripheral Modules, Welding & Cutting" der Firma Reis von 2003 ist auch eine Anordnung bekannt geworden, bei der ein Roboter mit seiner Steuerungseinrichtung horizontal unterhalb eines an einem Gestell austragenden Trägers, jedoch oberhalb eines Werkzeugtisches hängt.

Gestell und Roboter sind unterschiedliche Bauteile. Durch die bekannte Ausgestaltung des Gestells mit einem horizontalen Träger, der in den Raumbereich oberhalb des Positioniergerätes hineinragt, ist es ermöglicht, den Roboter als solchen an einer für ihn günstigen Stelle oberhalb des Positioniergerätes anzuordnen. Mit einem derartigen Gestell ist es möglich, eine räumlich optimale Position sowohl in der Höhenausrichtung, insbesondere durch entsprechende Anpassung der Höhen der seitlichen Stützen des Gestells, sowie eine Optimierung der horizontalen Positionen des Roboters durch entsprechende Ausrichtung des Trägers bzw. der Länge des Trägers und der Position des wenigstens einen Roboters auf dem Träger zu erreichen. In der bekannten Anordnung bedeutet dies, dass der horizontale Träger ohne weitere Abstützung freitragend in den Raumbereich oberhalb des Positioniergerätes hineinragt.

Ausgehend vom vorgenannten Stand der Technik ist es Aufgabe der Erfindung, eine Möglichkeit anzugeben, das Zusammenwirken von Roboter und Positioniergerät, insbesondere bezüglich der Flexibilität der Anordnung sowie der Genauigkeit des Robotors im Betrieb, zu verbessern.

Diese Aufgabe wird gelöst mit einer Roboteranordnung mit den in Anspruch 1 angegebenen Merkmalen.

Demgemäss ist eine erfindungsgemäße Roboteranordnung dadurch gekennzeichnet, dass der wenigstens eine Roboter vertikal oberhalb eines Außenstörradius des Positioniergerätes auf einem im wesentlichen horizontalen Träger des Gestells angeordnet ist.

Demgemäss ist der horizontale Träger von wenigstens zwei voneinander beabstandeten vertikalen Stützen getragen. Auf diese Weise sind Schwingungen, die durch den Betrieb des Roboters in das Gestell eingetragen werden, besonders gut beherrschbar.

Für eine Verwendung mit der erfindungsgemäßen Roboteranordnung kommen insbesondere Positioniergeräte mit ein oder zwei Werkstückhaltern zum Einsatz.

Bei einer Ausgestaltung eines Positioniergerätes mit zwei Werkstückhaltern liegt der besondere Vorteil darin, dass ein Werkstück auf demjenigen Werkstückhalter, der gerade nicht mit dem Roboter zusammenarbeitet, vom Werkstückhalter entfernbar oder ein noch zu bearbeitendes Werkstück auf diesem Werkstückhalter positionierbar ist.

In einer weiteren Fortbildung des Erfindungsgegenstandes ist mit dem Werkzeug des wenigstens einen Roboters jede Stelle im Arbeitsbereich des wenigstens einen Werkstückhalters erreichbar.

Durch diese Maßnahme kann das Zusammenwirken von Roboter und Werkstückhalter in besonders einfacher Weise optimiert werden. Der Werkstückhalter hat eine klar vorgegebene Geometrie. Durch eine entsprechende Wahl der Roboterposition können dessen mögliche Bewegungsabläufe optimal mit dem Arbeitsbereich des Werkstückhalters abgestimmt und seine konstruktionsbedingte Längenmaße optimal ausgenutzt werden.

Eine Weiterbildung der erfindungsgemäßen Roboteranordnung kennzeichnet sich dadurch, dass die Tragkonstruktion ein Drehlager aufweist, das um eine gedachte vertikale Drehachse drehbar und in dem das Positioniergerät gelagert ist.

Häufig sind solche Positioniergeräte als Tischgeräte ausgeführt. Dann bietet es sich an, die Tragkonstruktion des Positioniergerätes im Falle, dass dieses einen Werkstückhalter zum Beispiel in Form eines Werkstücktischs hat, als zentrale Stütze mittig unter diesem Werkstücktisch zu positionieren. In einem anderen Fall, wenn das Positioniergerät als Tischgerät aus zwei Werkstücktischen besteht, ist die Tragkonstruktion ebenfalls als zentrale Stütze mittig unterhalb beider Werkstücktische angeordnet, also mittig unterhalb des Tischgerätes. Weist eine derartige Tragkonstruktion ein Drehlager auf, ist es von Vorteil, wenn die Position des Werkstücks auf dem Werkstückhalter durch Drehung des Positioniergerätes leicht veränderbar ist, wodurch zusätzliche Flexibilität in den Anordnungsmöglichkeiten zwischen dem Werkzeug des Roboters und der Position des Werkstückes erreicht wird.

Zudem ist das Positioniergerät drehbar, so dass im Fall von zwei Werkstückhaltern von dem wenigstens einen Roboter an einer bestimmten Position des einen Werkstückhalters jeweils das betreffende Werkstück bearbeitbar ist, während auf dem anderen Werkstückhalter ein neues Werkstück zur Bearbeitung vorbereitbar ist. Durch einfaches Verdrehen des Positioniergerätes, in diesem Falle zum Beispiel um 180°, vertauschen die beiden Werkstückhalter ihre Positionen, so dass der Roboter danach auf seiner bisherigen Bearbeitungsseite das neue Werkstück bearbeiten kann, während der andere Werkstückhalter mit einem neuen Werkstück bestückbar ist. Auf diese Weise ist die Logistik für den Ab- beziehungsweise den Zutransport von Werkstücken zum Positioniergerät lediglich von einer Seite des Positioniergerätes zu organisieren.

Weitere vorteilhafte Ausgestaltung der erfindungsgemäßen Roboteranordnung sind den weiteren abhängigen Ansprüchen zu entnehmen.

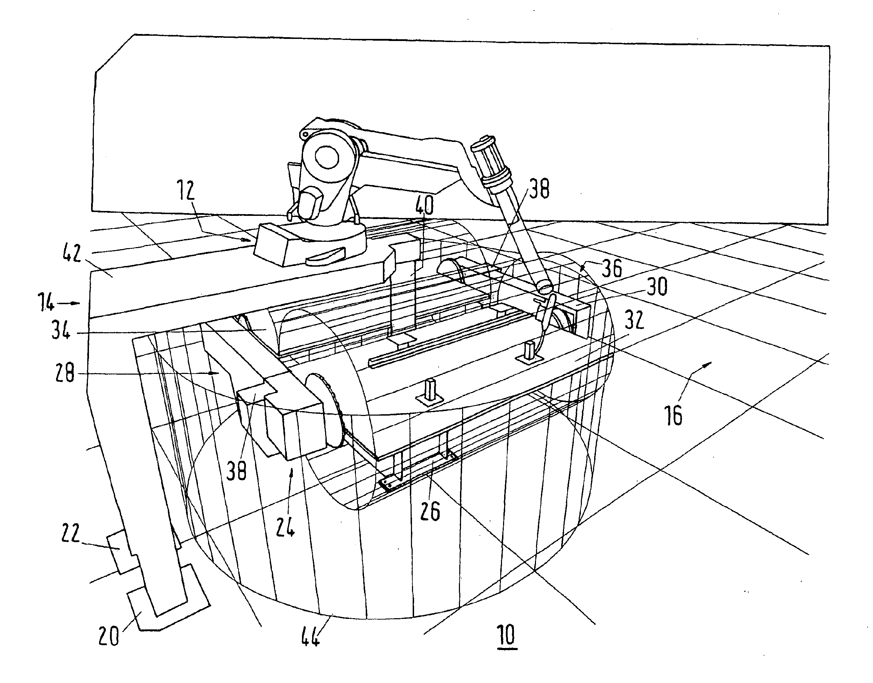

Anhand von einem in der Zeichnung dargestellten Ausführungsbeispiel sollen die Erfindung, vorteilhafte Ausgestaltungen und Verbesserungen der Erfindung sowie besondere Vorteile der Erfindung näher erläutert und beschrieben werden.

Es zeigt:
- Die einzige Fig.: eine erfindungsgemäße Roboteranordnung.

Die einzige Figur zeigt anhand einer Computergraphik ein Beispiel einer erfindungsgemäßen Roboteranordnung 10 mit einem Industrieroboter 12, der auf einem Gestell 14 angeordnet ist. Die Darstellung der Roboteranordnung 10 entspricht einer dreidimensionalen Ansicht von schräg oben auf eine Bildebene 16.

Das Gestell 14 weist eine erste 20 und eine zweite Tragsäule 22 auf, die von einer Positioniervorrichtung 24 beabstandet ist und auf der Bildebene 16 steht. Die Positioniervorrichtung 24 ist mit einem zentralen Tragfuß 26 mit der Bildebene 16, also zum Beispiel mit einem Fundament verbunden. Auf dem Tragfuß 26 ist ein Rahmen 28 in einem Drehlager drehbar gelagert, das in dieser Figur nicht dargestellt ist. Durch das Drehlager ist der Rahmen 28 um eine vertikal auf der Bildebene 16 stehende Achse frei drehbar.

Der Rahmen 28 weist zwei Seitenelemente 30 auf, zwischen welchen ein erster 32 und ein zweiter Werkstücktisch 34 drehbar gelagert sind. Die Drehung der Werkstücktische 32, 34 erfolgt dabei um eine Werkstücktischachse, die parallel zur Bildebene 16 gelegen ist. Derjenige Raumbereich, der für eine Rotation des Positioniergerätes benötigt wird, ist in der animierten Darstellung als durchsichtiger zylindrischer Körper 44 dargestellt, der mit einer Stirnseite auf der Bildebene 16 aufsteht. Der maximale Radius dieses Körpers wird als Außenstörradius des Positioniergerätes bezeichnet. Auf diese Weise lässt sich sehr gut zeigen, dass selbst bei einer Rotation des Rahmens 28 um die vertikale Drehachse des Tragfußes 26 die Raumbereiche 36, die für eine Rotation des jeweiligen Werkstücktisches um seine Achse benötigt werden, den zylindrischen Körper 44 nicht verlassen. Lediglich die Kanten sowie solche Linien zur Verdeutlichung der Kontur des Körpers 44 sind zu dessen Verdeutlichung in der Figur dargestellt.

Zum Antrieb der Werkstücktische 32, 34 ist in jedem Seitenelement 30 ein Motor 38 angeordnet, so dass einer der Motoren 38 den ersten Werkstücktisch 32 sowie ein weiterer Motor 38 den zweiten Werkstücktisch 34 rotieren lassen kann. Desweiteren sind die Werkstücktische 32, 34 soweit voneinander beabstandet in dem Rahmen 28 gelagert, dass beide unabhängig voneinander ansteuerbar sind und entsprechend rotieren können. Zudem ist dieser Abstand zwischen den Werkstücktischen 32, 34 so gewählt, dass eine dritte Tragsäule 40, die zwischen diesen angeordnet ist, deren Rotationsbewegung nicht stört. Die dritte Tragsäule 40 ist ein Bauteil des Gestells 14, wobei die erste, zweite und dritte Tragsäule 20, 22, 40 mit einem Querträger 42 verbunden sind.

Die Tragsäulen 20, 22, 40 zusammen mit dem Querträger 42 bilden ein Brückengestell, auf dessen Querträger 42 der Industrieroboter 12 positioniert ist.

Die Abstützungsposition der dritten Tragsäule 40 wurde nun so gewählt, dass er mit der Position des Tragfußes 26 zusammen fällt. Der Tragfuß 26 ist als Hohlkörper ausgestaltet, so dass die dritte Tragsäule 40 durch diesen durchgreift und auf der Bildebene 16 aufsteht. Aufgrund der perspektivischen Darstellung ist das jedoch in dieser Figur nicht sichtbar. Ebenfalls ist in dieser Figur nicht erkennbar, dass das Drehlager, welches den Rahmen 28 drehbar auf dem Tragfuß 26 abstützt, als Hohlwelle ausgebildet ist, so dass auch in diesem Bereich eine Kollision bei einer Drehung des Rahmens 28 samt seinen Werkstücktischen 32, 34 um die Drehachse des Drehlagers auf dem Tragfuß 26 vermieden ist.

Die dritte Tragsäule 40 hat den besonderen Vorteil, dass das Gestell 14 in besonderer Weise stabilisiert ist. Zum einen können auf diese Weise die Strukturelemente des Gestells 14, insbesondere die Tragsäulen 20, 22, 40 sowie der Querträger 42, vergleichsweise schlank ausgebildet werden; zum anderen werden die durch den Betrieb des Roboters 12 in das Gestell 14 übertragenen Schwingungen besonders gut aufgenommen und in das Fundament des Gestells 14, hier angedeutet durch die Bildebene 16, abgeleitet.

Zudem ist es bei einer derartigen Anordnung möglich, wie auch das hier gewählte Beispiel zeigt, dass der Roboter in horizontaler Richtung vergleichsweise nah zur Drehachse des Tragfußes 26 positionierbar ist. Im Beispielfall ist es dem Industrieroboter 12 ermöglicht, jeden Punkt der Raumbereiche 36 ohne weiteres zu erreichen. Zudem ist die Länge der Tragsäulen 20, 22, 40 so gewählt, dass die Raumbereiche 36 keinesfalls den Querträger 42 berühren.

Eine Einschränkung in der Beweglichkeit des Roboters 12 innerhalb des zylindrischen Körpers 44 gibt es jedoch, nämlich demjenigen Raum, den die Strukturen der Positioniervorrichtung 24 sowie des Gestells 14 einnehmen. Erfindungsgemäß wird hierzu vorgeschlagen, genau diese Strukturen möglichst klein, einfach und schlicht zu halten. So ist es insbesondere vorgesehen, den Querträger 42 im Bereich der dritten Tragsäule 40 zu verjüngen, wie in der einzigen Fig. dargestellt, insbesondere eine Verjüngung bis zur Breite des Querträgers 42. Es liegt aber auch innerhalb des Erfindungsgedankens, dass die Verjüngungen oder Ausnehmungen entlang des Querträgers 42 vorgesehen sind, wodurch die Freiheitsgrade für die Gestaltung möglicher Bewegungsbahnen des Roboters weiter zunehmen.

Insgesamt ist im gezeigten Beispiel sehr gut zu erkennen, dass eine Anordnung des Industrieroboters 12 vertikal oberhalb der Positioniervorrichtung 24 entscheidende Vorteile für die Roboteranordnung 10 mit sich bringt. So werden die maximalen Abstände zwischen dem Roboter sowie dem weitest entfernten Punkt auf einem Werkstücktisch durch die vorgeschlagene Anordnung wesentlich verringert im Vergleich zu einer Anordnung eines Roboters seitlich neben einer Positioniervorrichtung. Auf dieser Weise können die Längen der Roboterarme entsprechend reduziert werden. Ein weitere Vorteil besteht darin, dass die zurückzulegende Strecke des Werkzeuges entsprechend der Bewegungsbahnen des Roboters verkleinert ist. Die mittlere Zeitspanne zur Abarbeitung eines Bewegungsablaufes des Roboters ist in vorteilhafter Weise verkürzt.

Es ist auch ohne weiteres denkbar, dass anstatt der dritten Tragsäule 40 weitere Tragsäulen einen entsprechenden Querträger tragen, die auch jenseits der Positioniervorrichtung 24 auf der Bildebene 16 aufstehen können, so dass die gesamte Positioniervorrichtung durch eine Gestellbrücke überbrückt wird. Auf diese Weise ist erreicht, dass ein Roboter auf besonders einfache Weise genau in der Drehachse der Positioniervorrichtung anordenbar ist. Darüber hinaus liegt es innerhalb des Erfindungsgedankens, dass weitere Roboter zum Beispiel ein zweiter und dritter Roboter usw. auf dem Querträger angeordnet sind, die dann unabhängig voneinander verschiedene Aufgaben auf den Werkstücktischen, bearbeiten können.

### Bezugszeichenliste

- 10: Roboteranordnung
- 12: Industrieroboter
- 14: Gestell
- 16: Bildebene
- 20: erste Tragsäule
- 22: zweite Tragsäule
- 24: Positioniergerät
- 26: Tragfuß
- 28: Rahmen
- 30: Seitenelement
- 32: erster Werkstücktisch
- 34: zweiter Werkstücktisch
- 36: Raumbereich
- 38: Motor
- 40: dritte Tragsäule
- 42: Querträger
- 44: zylindrischer Körper

## Patentansprüche

1. Roboteranordnung (10) mit wenigstens einem Roboter, der auf einem Gestell (14) angeordnet ist, und mit wenigstens einem drehbaren Positioniergerät (24) für die zu bearbeitenden Werkstücke, das wenigstens einen Werkstückhalter aufweist, und welches Positioniergerät (24) auf einer Tragkonstruktion (26) angeordnet ist, wobei der wenigstens eine Roboter vertikal oberhalb eines für die Rotation des Positioniergerätes benötigten Raumbereiches auf einem im wesentlichen horizontalen Träger (42) des Gestells (14) angeordnet ist, **dadurch gekennzeichnet, dass** das Gestell eine brückenartige Gestalt aufweist, dass das Gestell eine Tragsäule (40) aufweist, die in dem für die Rotation des Positioniergerätes benötigten Raumbereich angeordnet ist.

2. Roboteranordnung (10) nach Anspruch 1, **dadurch gekennzeichnet, dass** das Positioniergerät (24) ein oder zwei Werkstückhalter (32, 34) aufweist.

3. Roboteranordnung (10) nach Anspruch 1 oder 2 einem der vorgenannten Ansprüche, **dadurch gekennzeichnet, dass** mit einem Werkzeug des wenigstens einen Roboters jede Stelle im Arbeitsbereiches des wenigstens einen Werkstückhalters (32, 34) erreichbar ist.

4. Roboteranordnung (10) nach einem der vorgenannten Ansprüche, **dadurch gekennzeichnet, dass** mit einem Werkzeug des wenigstens einen Roboters jede Stelle des Arbeitsbereichs des Positioniergerätes (24) erreichbar ist.

5. Roboteranordnung (10) nach einem der vorgenannten Ansprüche, **dadurch gekennzeichnet, dass** die vertikale Drehachse mit der Drehachse eines Stationswechslers des Positioniergerätes (24) zusammenfällt.

6. Roboteranordnung (10) nach Anspruch 5, **dadurch gekennzeichnet, dass** das Drehlager als Hohlwelle ausgebildet ist.

7. Roboteranordnung (10) nach Anspruch 6, **dadurch gekennzeichnet, dass** die Tragsäule (40) eine vertikale Stütze aufweist, die auf der Tragkonstruktion (26) oder durch einen Hohlkörper der Tragekonstruktion (26) durchgreifend auf dem Boden abgestützt ist.

8. Roboteranordnung (10) nach einem der vorgenannten Ansprüche 6 bis 9, **dadurch gekennzeichnet, dass** ein Roboter (12) in etwa in der Verlängerung der Drehachse auf dem Träger (42) angeordnet ist.

9. Roboteranordnung (10) nach einem der vorgenannten Ansprüche, **dadurch gekennzeichnet, dass** der Träger (42) stellenweise Ausnehmungen aufweist, die auf mögliche Bewegungsbahnen des wenigstens einen Roboters (12) angepasst sind.

## Claims

1. A robot arrangement (10), comprising at least one robot which is arranged on a frame (14) and at least one rotatable positioning device (24) for the workpieces to be processed which comprises at least one workpiece holder, and which positioning (24) is arranged on a support construction (26), with the at least one robot being arranged vertically above a spatial area required for the rotation of the positioning device on a substantially horizontal support (42) of the frame (14),
**characterized in that** the frame has a bridge-like shape, that the frame has a support column (40) which is arranged in the spatial area required for the rotation of the positioning device.

2. A robot arrangement (10) according to claim 1, **characterized in that** the position device (24) comprises one or two workpiece holders (32, 34).

3. A robot arrangement (10) according to claim 1 or 2 of one of the preceding claims, **characterized in that** any point in the work area of the at least one workpiece holder (32, 34) can be reached with a tool of the at least one robot.

4. A robot arrangement (10) according to one of the preceding claims,
**characterized in that** any position of the work area of the positioning device (24) can be reached with a tool of the at least one robot.

5. A robot arrangement (10) according to one of the preceding claims,
**characterized in that** the vertical rotational axis coincides with the rotational axis of a station changer of the positioning device (24).

6. A robot arrangement (10) according to claim 5, **characterized in that** the rotational bearing is arranged as a hollow shaft.

7. A robot arrangement (10) according to claim 6, **characterized in that** the support column (40) comprises a vertical support which rests on the support construction (26) or through to the floor through a hollow body of the support construction (26).

8. A robot arrangement (10) according to one of the preceding claims 6 to 9,
**characterized in that** a robot (12) is arranged on the support (42) approximately in the extension of the rotational axis.

9. A robot arrangement (10) according to one of the preceding claims,
**characterized in that** the support (42) has recesses in certain places which are adjusted to possible orbits of the at least one robot (12).

## Revendications

1. Disposition de robot (10) avec au moins un robot disposé sur un bâti (14) et avec au moins un appareil de positionnement (24) capable de rotation pour les pièces à usiner, qui présente au moins un porte-pièce, lequel appareil de positionnement (24) est disposé sur une construction portante (26), l'au moins un robot étant disposé verticalement au-dessus d'une zone de l'espace nécessaire pour la rotation de l'appareil de positionnement sur un support (42) sensiblement horizontal du bâti (14), **caractérisée en ce que** le bâti a une forme de portique, **en ce que** le bâti comporte un montant de support (40) qui est disposé dans la zone de l'espace nécessaire pour la rotation de l'appareil de positionnement.

2. Disposition de robot (10) selon la revendication 1, **caractérisée en ce que** l'appareil de positionnement (24) possède un ou deux porte-pièce (32, 34).

3. Disposition de robot (10) selon la revendication 1 ou 2 l'une des revendications précédentes, **caractérisée en ce chaque** point de la zone de travail de l'au moins un porte-pièce (32, 34) peut être atteint avec un outil de l'au moins un robot.

4. Disposition de robot (10) selon l'une des revendications précédentes, **caractérisée en ce que** chaque point de la zone de travail de l'appareil de positionnement (24) peut être atteint avec un outil de l'au moins un robot.

5. Disposition de robot (10) selon l'une des revendications précédentes, **caractérisée en ce que** l'axe de rotation vertical coïncide avec l'axe de rotation d'un changeur de poste de l'appareil de positionnement (24).

6. Disposition de robot (10) selon la revendication 5, **caractérisée en ce que** le palier rotatif est conformé comme un arbre creux.

7. Disposition de robot (10) selon la revendication 6, **caractérisée en ce que** le montant vertical (40) comporte au moins un support vertical qui s'appuie sur la construction portante (26) ou sur le sol en traversant un élément creux de la construction portante (26).

8. Disposition de robot (10) selon l'une des revendications 6 à 9, **caractérisée en ce qu'**un robot (12) est disposé sur le support (42) approximativement dans le prolongement de l'axe.

9. Disposition de robot (10) selon l'une des revendications précédentes, **caractérisée en ce que** le support (42) présente par endroits des évidements adaptés aux trajectoires de déplacement possibles de l'au moins un robot (12).
